Europäisches Patentamt

European Patent Office

Office européen des brevets

(11) Veröffentlichungsnummer: **0 141 062**
**A1**

(12) # EUROPÄISCHE PATENTANMELDUNG

(21) Anmeldenummer: 84108974.1

(22) Anmeldetag: 28.07.84

(51) Int. Cl.⁴: **G 01 C 19/64**

(30) Priorität: 25.08.83 DE 3330660

(43) Veröffentlichungstag der Anmeldung:
15.05.85 Patentblatt 85/20

(84) Benannte Vertragsstaaten:
DE FR GB

(71) Anmelder: **Bodenseewerk Gerätetechnik GmbH**
**Alte Nussdorfer Strasse 15 Postfach 1120**
**D-7770 Überlingen/Bodensee(DE)**

(72) Erfinder: **Bernard, Walter, Dr.**
**Allmendweg 6**
**D-7758 Meersburg(DE)**

(72) Erfinder: **Schwarz, Karl-Hans**
**Hofäckerstrasse 8**
**D-7776 Owingen(DE)**

(74) Vertreter: **Weisse, Jürgen, Dipl.-Phys. et al,**
**Patentanwälte Dipl.-Phys. Jürgen Weisse Dipl.-Chem. Dr.**
**Rudolf Wolgast Bökenbusch 41 Postfach 11 03 86**
**D-5620 Velbert 11 Langenberg(DE)**

(54) **Einrichtung zur Messung von Unterschieden der Eigenresonanzfrequenzen optischer Resonatoren.**

(57) Ein Lasergyroskop enthält einen Ringresonator (36). Erregerwellen werden von einem Laser (10) erzeugt. Die Intensität des Laserstrahls (12) wird durch einen Laserstrommodulator 14 moduliert. Die Modulationsfrequenz $f_1$ wird so geregelt, daß Seitenbänder $f_0-f_1$ und $f_0+f_1$ den Resonanzfrequenzen des Ringresonators (36) für linksherum und rechtsherum laufendes Licht nachgeführt werden, wenn sich die Resonanzfrequenz $f_0$ infolge einer inertialen Winkelgeschwindigkeit durch den Sagnac-Effekt aufspaltet. Die Modulationsfrequenz liefert dann ein Maß für die Winkelgeschwindigkeit.

FIG.1

Croydon Printing Company Ltd.

EP 0 141 062 A1

## Einrichtung zur Messung von Unterschieden der Eigenresonanzfrequenzen optischer Resonatoren

Die Erfindung betrifft eine Einrichtung zur Messung der durch eine Eingangsmeßgröße bedingten Unterschiede der Eigenresonanzfrequenzen optischer Resonatoren, welche mittels eines Lasers optische Erregerwellen erhalten, enthaltend

(a) Mittel zur Veränderung der Frequenzen der auf die beiden optischen Resonatoren gegebenen Erregerwellen,

(b) auf den Resonanzzustand der optischen Resonatoren ansprechende Detektoren und

(c) eine von den Signalen der Detektoren beaufschlagte Regeleinrichtung, durch welche frequenzverändernden Mittel steuerbar sind.

Die beiden optischen Resonatoren sind vorzugsweise die gegensinnigen Lichtwege eines passiven Ringresonators bei einem Lasergyroskop. Die Eingangsgröße ist in diesem Fall eine Drehgeschwindigkeit, die durch den Sagnac-Effekt die Resonanzfrequenzen der "rechtsherum" und "linksherum" verlaufenden Lichtwege gegensinnig verändert.

Durch die US-PS 4 274 742 ist ein Lasergyroskop mit einem passiven Ringresonator bekannt. Ein von einem Laser erzeugtes Lichtbündel wird von einem Spiegelsystem in zwei Lichtbündel aufgespalten, von denen das eine im Uhrzeigersinn und das andere entgegen dem Uhrzeigersinn als Erregerwelle auf einen passiven Ringresonator gegeben wird. Der Ringresonator enthält einen teildurchlässigen Spiegel, durch welchen die beiden Lichtbündel eintreten, zwei diametral einander gegenüberliegende voll reflektierende Spiegel und einen zweiten teildurchlässigen Spiegel, durch welchen Teile der rechtsherum und linksherum laufenden Lichtbündel auf je einen Photodetektor fallen. Die Spiegel sitzen etwa in den Ecken eines Quadrats unter 45$^{\mathrm{o}}$ zur Strahlrichtung, so daß der Lichtweg ein Quadrat bildet. Der eine voll reflektierende Spiegel ist periodisch vor- und zurückbewegbar. Dadurch wird die Resonanzfrequenz des Ringresonators zwischen zwei Grenzwerten periodisch verändert. Die Frequenz des Laserlichts, also der Erregerwelle, liegt im Schnittpunkt der den beiden Grenzwerten entsprechenden Resonanzkurven des Ringresonantors. Es ergeben sich entsprechende gleiche Signale an den beiden Photodetektoren. Bei einer Drehbewegung der Anordnung in der Ebene des Lichtweges verändern sich durch den Sagnac-Effekt die Resonanzfrequenzen des Ringresonators für das rechtsherum und das linksherum laufende Lichtbündel gegensinnig. Es erfolgt eine Modulation der auf die Detektoren fallenden Intensitäten. Die Differenz

der Detektorsignale liefert ein Rechtecksignal, dessen Amplitude der Drehgeschwindigkeit proportional ist.

Durch die US-PS 4 135 822 ist ein Lasergyroskop mit einem passiven Ringresonator bekannt, bei welchem durch zwei Laser über teildurchlässige Spiegel eine linksherum und eine rechtsherum laufende Erregerwelle erzeugt werden. Teilbündel der in dem Ringresonator linksherum und rechtsherum umlaufenden Lichtbündel fallen durch teildurchlässige Spiegel auf je einen Photodetektor. Die Laser sind über einen Regelkreis in Abhängigkeit von den Signalen der Photodetektoren in ihrer Frequenz veränderbar, so daß die Frequenz des Laserlichts jeweils der Resonanzfrequenz für die betreffende Umlauf-richtung des Ringresonators entspricht. Der Betrag und die Richtung einer inertialen Drehgeschwindigkeit der Anordnung wird aus der Frequenzverschiebung der Laser bestimmt. Bei einer anderen Ausführungsform ist statt zweier frequenzregelbarer Laser ein Laser vorgesehen, dessen Lichtbündel in zwei Teilbündel aufgespalten wird. Die Frequenzen der beiden Teilbündel sind durch Lichtmodulatoren, z.B. Braggzellen, veränderbar.

Eine ähnliche Anordnung zeigt die US-PS 4 352 562.

Durch die DE-OS 29 34 794 ist ein Lasergyroskop bekannt, bei welchem von einen Laser mittels eines Strahlenteilers zwei Teillichtströme erzeugt werden, welche einen Ringresonator in entgegengesetzten Richtungen durchlaufen. Die beiden Teillichtströme werden dann wieder vereinigt und auf einen Photodetektor geleitet. Die beiden Teillichtströme werden durch Einseitenbandmodulatoren, z.B. Braggzellen, mit zwei Frequenzen moduliert. Die Frequenz wenigstens eines der Einseitenbandmodulatoren wird so geregelt, daß das Ausgangssignal am Photodetektor auf einem konstanten oder einem maximalen Wert gehalten wird. Aus der Frequenzdifferenz kann die inertiale Drehgeschwindigkeit der Anordnung bestimmt werden.

Die Anordnung nach der US-PS 4 274 724 erfordert eine periodische, mechanische Veränderung des Resonanzraumes. Dabei ist die Auflösung des Stellglieds begrenzt.

Die Anordnung nach US-PS 4 135 822 erfordert entweder zwei frequenzregelbare Laser, was aufwendig ist oder Braggzellen im anregenden Laserstrahl zur Erzeugung von Frequenzverschiebungen.

Auch bei der DE-OS 29 34 794 sind Braggzellen oder ähnliche Bauteile im Resonanzraum des passiven Ringresonators angeordnet. Diese beeinflussen die erreichbare Resonanzgüte und die Rückstreueigenschaften des Ringresonators negativ.

Der Erfindung liegt die Aufgabe zugrunde, eine Einrichtung der eingangs definierten Art einfach und ohne mechanisch bewegte Teile aufzubauen.

Mechanisch bewegte Teile sind in diesem Sinn z.B. die piezoelektrischen Stellglieder zur Verstellung der voll reflektierenden Spiegel des passiven Ringresonators bei der US-PS 4 274 742, die piezoelektrischen Stellglieder zur Verstellung der die Resonanzhohlräume der Laser begrenzenden Spiegel zur Veränderung der Frequenz des Laserstrahls bei der US-PS 4 135 822 oder auch die akustisch schwinigenden Braggzellen bei der US-PS 4 135 822 und der DE-OS 29 34 794.

Erfindungsgemäß wird die oben angegebene Aufgabe dadurch gelöst, daß

(d) die frequenzverändernden Mittel von einer Modulationseinrichtung gebildet sind, durch welche die von dem
Laser gelieferte optische Erregerwelle zur Erzeugung von Seitenbändern modulierbar ist, und

(e) die Modulationsfrequenz der Modulationseinrichtung
durch die Regeleinrichtung so gesteuert ist, das
zwei Seitenbänder der modulierten Erregerwelle mit
den Resonatoren in Resonanz sind,

wobei die Modulationsfrequenz oder eine dieser
analoge Meßgröße einen Meßwert für den Unterschied
der Eigenresonanzfrequenz und damit die Eingangsmeßgröße liefert.

Die beiden optischen Resonatoren können die gegensinnigen
Lichtwege eines passiven Ringresonators bei einem Lasergyroskop sein.

Vorzugsweise ist der von dem Laser gelieferte Laserstrahl
durch die Modulationseinrichtung amplitudenmodulierbar.

Ein Ausführungsbeispiel der Erfindung ist nachstehend
unter Bezugnahme auf die zugehörigen Zeichnungen näher
erläutert.

Fig. 1    zeigt schematisch ein Lasergyroskop mit
          einem passiven Ringresonator.

Fig. 2    veranschaulicht die Aufspaltung der
          Resonanzkurve des Ringresonators.

Fig. 3    veranschaulicht die Seitenbänder der
          Erregerfrequenz $f_0$ bei der Modulation
          mit einer Modulationsfrequenz $f_1$.

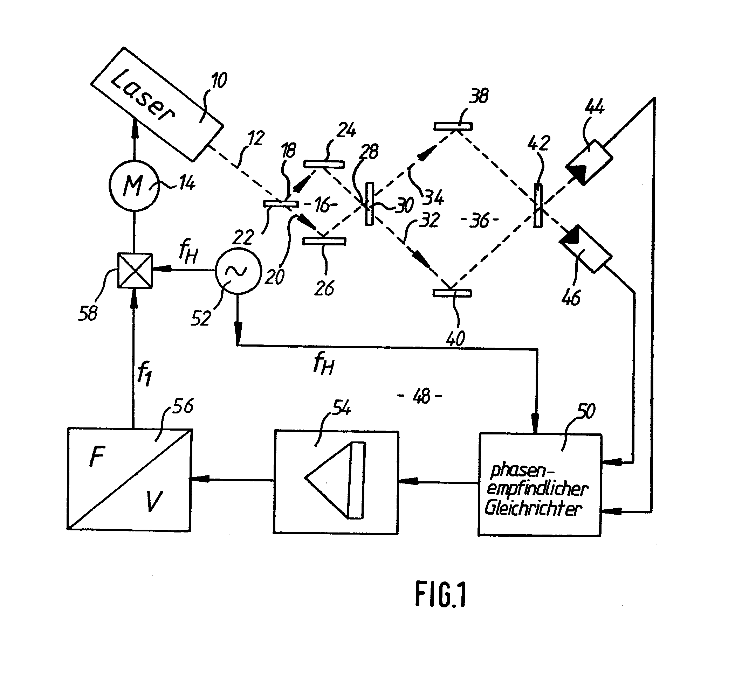

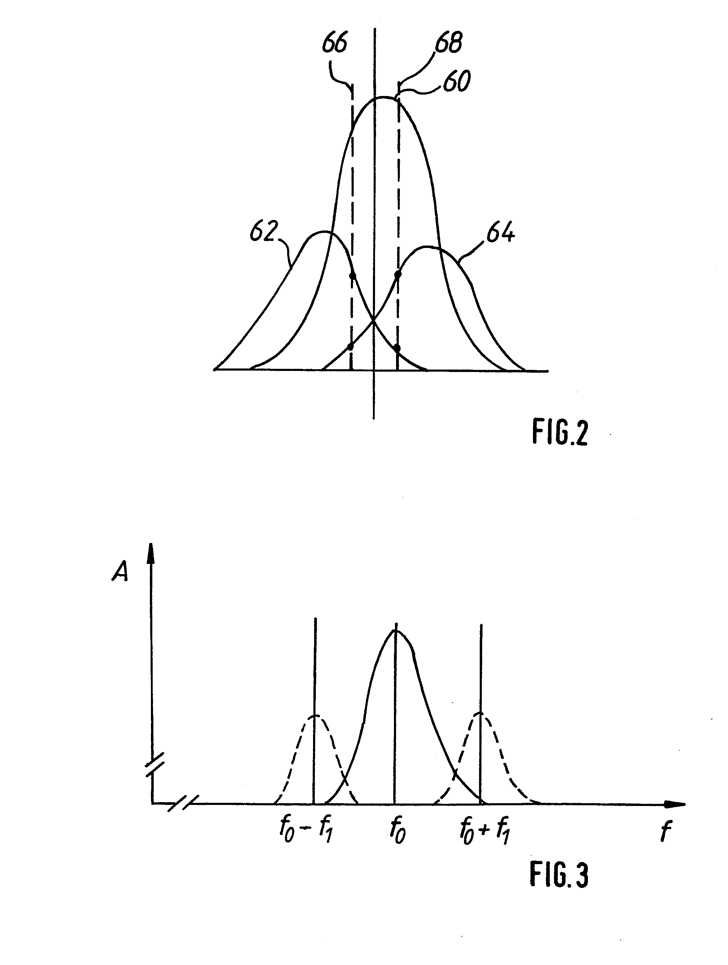

Mit 10 ist ein Laser bezeichnet, der einen Laserstrahl 12 erzeugt. Die Intensität des Laserstrahls 12 ist durch einen Laserstrommodulator 14 in bekannter Weise veränderbar. Der Laserstrahl 12 wird durch eine Spiegelanordnung 16 in zwei Teilstrahlen 18 und 20 aufgespalten. Die Spiegelanordnung 16 enthält einen teildurchlässigen Spiegel 22, der unter 45$^o$ zur Richtung des Laserstrahls 12 angeordnet ist. Der Teilstrahl 18 wird von dem Spiegel 22 reflektiert, und der Teilstrahl 20 geht durch den Spiegel 22 hindurch. Der Teilstrahl 18 wird an einem voll reflektierenden Spiegel 24 reflektiert, der parallel zu dem Spiegel 22 unter einem Winkel zur Richtung des Teilstrahls 18 angeordnet ist, und nach unten in Fig. 1 umgelenkt. Der Teilstrahl 20 wird an einem voll reflektierenden Spiegel 26 reflektiert, der parallel zu dem Spiegel 24 und diesem zugewandt unter einem Winkel zur Richtung des Teilstrahls 20 angeordnet ist. Dadurch wird der Teilstrahl 20 nach oben in Fig. 2 umgelenkt. Die beiden von den Spiegeln 24 bzw. 26 reflektierten Teilstrahlen 18 und 20 schneiden sich in einem Punkt 28. In diesem Punkt 28 sitzt ein teildurchlässiger Spiegel 30, dessen Ebene senkrecht zur Ebene des teildurchlässigen Spiegels 22 liegt und auf den die beiden Teilstrahlen 18 und 20 von entgegengesetzten Seiten schräg auftreffen. Teile der Teilstrahlen 18 und 20 treten durch diesen teildurchlässigen Spiegel 30 hindurch. Diese Teile sind als Strahlen 32 bzw. 34 bezeichnet. Die vier Spiegel 22,24,26 und 30 sitzen in den Ecken eines Parallelogramms. Die Teilstrahlen 18 und 20 verlaufen längs der Seiten dieses Parallelogramms.

Der Spiegel 30 bildet einen Teil eines Ringresonators 36. Der Ringresonator 36 enthält vier Spiegel, nämlich den teildurchlässigen Spiegel 30, zwei voll reflektierende Spiegel 38 und 40 und einen teildurchlässigen Spiegel 42.

0141062

Die vier Spiegel 30,38,40 und 42 sitzen wieder in den Ecken eines Parallelogramms. Die teildurchlässigen Spiegel 30 und 42 sind parallel zueinander und sind an gegenüberliegenden Ecken des Parallelogramms angeordnet. Die beiden voll reflektierenden Spiegel 38 und 40 sind ebenfalls parallel zueinander und einander zugewandt an den beiden anderen Ecken des Parallelogramms angeordnet. Die Ebenen der voll reflektierenden Spiegel 38 und 40 sind senkrecht zu den Ebenen der teildurchlässigen Spiegel 30 und 42.

Die beiden Strahlen 32 und 34 verlaufen schräg zu dem teildurchlässigen Spiegel 30 nach entgegengesetzten Seiten von der Spiegelnormale. Der Strahl 32 wird nacheinander an den Spiegeln 40,42,38 und wieder 30 reflektiert und durchläuft den Ringresonator 36 entgegen dem Uhrzeigersinn oder "linksherum". Der Strahl 34 wird nacheinander von den Spiegeln 38,42,40 und wieder 30 reflektiert und durchläuft den Ringresonator 36 im Uhrzeigersinn oder "rechtsherum". Die Strahlen 32 und 34 erzeugen die Erregerwellen des Ringresonators 36.

Teile des Strahls 32 treten durch den teildurchlässigen Spiegel 42 hindurch und fallen auf einen Photodetektor 44. Teile des Strahls 34 treten durch den teildurchlässigen Spiegel 42 hindurch und fallen auf einen Photodetektor 46. Die Signale der Photodetektoren 44 und 46 sind auf eine Signalverarbeitungsschaltung 48 geschaltet.

Die Signale der beiden Photodetektoren 44 und 46 werden gegeneinandergeschaltet und liegen an einem phasenempfindlichen Gleichrichter 50 an. Der phasenempfindliche Gleichrichter 50 ist von einem Hilfsoszillator 52 mit einer Hilfsfrequenz $f_H$ gesteuert. Das Ausgangssignal des phasenempfindlichen Gleichrichters 50 liegt an einem als Integrator ausgebildeten Regler 54, dessen Ausgangsspannung sich solange ändert, wie an dem phasenempfindlichen Gleichrichter 50 ein Signal auftritt. Das Ausgangssignal des Reglers 54 liegt an einem Spannungs-Frequenz-Umsetzer 56, der eine Modulationsfrequenz $f_1$ liefert. Das Signal mit der Modulationsfrequenz $f_1$ wird wiederum mit der Hilfsfrequenz $f_H$ durch einen Modulator 58 gewobbelt.

Die Frequenz $f_1$ liefert ein Maß für die intertiale Drehgeschwindigkeit des Ringresonators 36 in seiner Ebene.

Die beschriebene Anordnung arbeitet wie folgt:

Bei Abwesenheit einer inertialen Drehgeschwindigkeit in der Ebene des Ringresonators 36 hat die Resonanzfrequenz des Ringresonators 36 den Wert $f_o$. Die Resonanzkurve ist die Kurve 60 von Fig. 2 und 3. Das gilt für beide Richtungen des Lichts. Die Frequenz des Laserlichts des Lasers 10 ist auf diese Resonanzfrequenz abgestimmt.

Wenn eine Drehgeschwindigkeit auftritt, dann spaltet sich, wie gesagt, die Resonanzkurve 60 auf, z.B. in Resonanzkurven 62 und 64 in Fig. 2 für (beispielsweise) den linksherum bzw. den rechtsherum laufenden Lichtweg. Es sei angenommen, daß die Frequenz des Laserlichts zunächst noch $f_o$ sei, jedoch gewobbelt mit der Hilfsfrequenz $f_H$, wie durch die gestrichelten Linien 66 und 68 angedeutet ist. Bei der unteren Frequenz ist die Amplitude des linksherum laufenden Lichts gemäß Resonanzkurve 62 relativ groß und die Amplitude des rechtsherum laufenden Lichts gemäß Resonanzkurve 64 relativ klein. Bei der oberen Frequenz ist es umgekehrt:

Die Amplitude des linksherum laufenden Lichts gemäß Resonanzkurve 62 ist relativ klein und die Amplitude des rechtsherum laufenden Lichts gemäß Resonanzkurve 64 ist relativ groß. Durch die Modulation der Frequenz $f_o$ des Laserlichts mit der Hilfsfrequenz $f_H$ werden somit gegenphasige Signale der Photodetektoren 44 und 46 mit der Hilfsfrequenz $f_H$ erzeugt. Diese Signale werden gegeneinandergeschaltet und durch den phasenempfindlichen Gleichrichter phasenrichtig gleichgerichtet. Es entsteht dann ein Eingangssignal an dem integrierenden Regler 54, der ein ansteigendes Signal auf den Spannungs-Frequenz-Wandler 56 gibt. Damit wird eine Modulationsfrequenz $f_1$ erzeugt, mit welcher die Intensität des Laserstrahls 12 moduliert und die Erregerwelle in zwei Seitenbänder mit den Frequenzen $f_o-f_1$ und $f_o+f_1$ aufgespalten wird, wobei beide Frequenzen noch mit der Hilfsfrequenz $f_H$ moduliert sind. Die beiden so erhaltenen Erregerwellen werden so mit ihren Frequenzen den Resonanzfrequenzen des Ringresonators 36 nachgeführt. Es ergibt sich der in Fig. 3 dargestellte Zustand: Die Resonanzkurve 60 des Ringresonators 36 ist aufgespalten in die Resonanzkurven 62 und 64. Die Frequenz $f_o$ der Erregerwelle ist aufgespalten in die Frequenzen $f_o-f_1$ und $f_o+f_1$, die im Gleichgewichtszustand mit den Maxima der Resonanzskurven 62 bzw. 64 zusammenfallen. Um diese Mittelfrequenzen schwanken die Frequenzen der Erregerwellen noch periodisch mit der Hilfsfrequenz $f_H$.

Solange die beiden Mittelfrequenzen $f_o-f_1$ und $f_o+f_1$ in den Maxima der Resonanzkurven 62 und 64 liegen, sind die durch die Hilfsfrequenz bedingten Änderungen der Intensitäten an den beiden Photodetektoren 44 und 46 gleichphasig und heben sich durch die Gegeneinanderschaltung auf. Bei einer gegensinnigen Verlagerung der Resonanzkurven 62 und 64 erfolgt eine gegenphasige Modulation der Signale der beiden Photodetektoren, die, wie beschrieben, eine Nachführung der Frequenz $f_1$ bewirkt.

Patentansprüche

1. Einrichtung zur Messung der durch eine Eingangsmeßgröße bedingten Unterschiede der Eigenresonanzfrequenzen optischer Resonatoren, welche mittels
eines Lasers optische Erregerwellen erhalten, enthaltend

(a) Mittel zur Veränderung der Frequenzen der auf
die beiden optischen Resonatoren gegebenen
Erregerwellen,

(b) auf den Resonanzzustand der optischen
Resonatoren ansprechende Detektoren und

(c) eine von den Signalen der Detektoren beaufschlagte Regeleinrichtung, durch welche
frequenzverändernden Mittel steuerbar sind,

dadurch gekennzeichnet, daß

(d) die frequenzverändernden Mittel von einer
Modulationseinrichtung (14) gebildet sind,
durch welche die von dem Laser (10) gelieferte
optische Erregerwelle zur Erzeugung von
Seitenbändern modulierbar ist, und

0141062

(e)   die Modulationsfrequenz der Modulationseinrichtung (14) durch die Regeleinrichtung (54)
      so gesteuert ist, das zwei Seitenbänder der
      modulierten Erregerwelle mit den Resonatoren
      in Resonanz sind,

      wobei die Modulationsfrequenz oder eine dieser
      analogen Meßgröße einen Meßwert für den Unterschied der Eigenresonanzfrequenz und damit
      die Eingangsmeßgröße liefert.

2.    Einrichtung nach Anspruch 1, dadurch gekennzeichnet,
      daß die beiden optischen Resonatoren die gegensinnigen Lichtwege eines passiven Ringresonators (36)
      bei einem Lasergyroskop sind.

3.    Einrichtung nach Anspruch 1 oder 2, dadurch gekennzeichnet, daß der von dem Laser (10) gelieferte
      Laserstrahl (12) durch die Modulationseinrichtung
      (14) amplitudenmodulierbar ist.

FIG.1

FIG.2

FIG.3

Europäisches
Patentamt

**0141062**
Nummer der Anmeldung

**EUROPÄISCHER RECHERCHENBERICHT**

EP 84 10 8974

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 204 810 (LICENTIA) * Seite 1, Zeilen 1-13 * | 1-3 | G 01 C 19/64 |
| A | US-A-4 274 742 (LUSTIG) | | |

| RECHERCHIERTE SACHGEBIETE (Int. Cl.4) |
|---|
| G 01 C<br>G 01 P<br>G 02 B |

Der vorliegende Recherchenbericht wurde für alle Patentansprüche erstellt.

| Recherchenort<br>DEN HAAG | Abschlußdatum der Recherche<br>05-12-1984 | Prüfer<br>DE BUYZER H.J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82